# EUROPEAN PATENT APPLICATION

(11) **EP 3 242 058 A1**
(43) Date of publication of application: **08.11.2017**
(21) Application number: 17466003.5
(22) Date of filing: 22.02.2017
(51) Int. Cl.: F16H 33/00, E05F 1/08, F16H 21/44

(54) **MECHANISM FOR OPTIMALIZATION OF DRIVING FORCE WITH CONTINUOUS AUTOMATIC SHIFT OF GEAR RATIO**

(30) Priority: 22.02.2016 CZ 20160106
(71) Applicant: EKOTES TRADE spol. s r.o., 252 10 Zahorany (CZ)
(72) Inventor: JANDA, Frantisek, Praha 3, 130 00 (CZ); JANDA, Tomás, Praha 3, 130 00 (CZ)

(57) **Abstract**

Mechanism for optimalization of driving force with continuous automatic shift of gear ratio where depending on the angle of rotation of the first arm (11) which is firmly or adjustably connected to the second arm (13), whereas both arms are as a whole rotating around the pivot point (7), is automatically continuously set the shortest possible length of the connecting piece (4) between the first pulley (9) and the first freely movable mounting (5) of the first connecting piece (4), whereby is changed the working length of the first arm (11) and thus there occurs an automatic continuous shift of gear ratio between the first arm (11) and the second arm (13), whereas the position of the first connecting piece (4) remains during the whole time of the movement practically vertical to the first arm (11) and thus it is ensured that also the acting force is practically vertical to the first arm (11), whereby the part of force acting in the direction of the required movement is optimized. This mentioned mechanism eliminates the linear increase of force e.g. of a spring or other accumulator of force depending on travel and substitutes it with a constant size of force.

## Description

### Field of the invention

The invention concerns the mechanism for optimalization of driving force depending on travel or angle of rotation.

### State of the art

During manipulation of machinery components with force or energy accumulation there occurs a situation when the initial minimal driving force grows linear or nonlinear depending on travel or angle of rotation. This can result in issues on the ground of necessity of larger mechanism dimensioning and last but not least also capture of reactive forces of such mechanism.

The only known resembling construction which tries to solve the above mentioned situation is a device for gravity compensation according to the document WO2005/116487 A1 which describes the balancing of a counterweight by help of a spring, whereas either the counterweight or the spring, in case of need both the counterweight and the spring are suspended on a pulley with radius firmly set by the shape of the pulley which changes depending on the angle of rotation. An alternative to this solution is a lever pivoted approximately in its centre and on which is on a firm arm suspended a spring and a second arm where is suspended a weight having variable length depending on the angle of rotation. This is realized by movable mounting of the weight on the lever where this mounting is led in a groove which determines the size of the arm.

Common disadvantage of all these solutions is that the force of the weight has effect only in vertical direction and in some cases there occurs adverse resolution of forces applying especially for described case with the lever.

The aim of this invention is to find out the mechanism construction which by using almost continuous optimal force allows operation of various mechanisms, e.g. opening and closing door mechanism with minimal burden on its hinges or regarding many applications substituting currently used counterweight by a spring or other accumulator of energy with ensuring constant flow of force.

### Basic principle of the invention

Herein listed invention solves, and to some extent eliminates shortcomings of known solutions of this kind, the mechanism for optimalization of driving force with continuous automatic shift of gear ratio according to this invention, conveying force e.g. to opening and closing door mechanism whose basic principle is that the second arm rotating around the pivot point is connected in a firm or adjustable way with the first arm which is equipped with modification for inserting an adjustable fixture for automatic shift of gear ratio between the first and second arm. The gear ratio between the first and second arm change automatically optimally when the force acts on the second arm rotating around the pivot point which is firmly connected with the first arm. E.g. during operating a machinery part with linear force increase depending on travel, then the force on the second arm can remain practically constant and its maximal size shall not exceed half of maximal force which would be otherwise needed.

Solution based on this invention has advantage in the fact that by using the pulley and movable mounting of the connecting piece it is ensured that optimally geared force acts always vertically on variable arm and there occurs almost no undesirable resolution of forces. In many cases by using this invention it is possible to substitute hitherto used counterweights.

### Comments to drawings

This invention shall be more closely explained by drawings where fig.1 indicates the mechanism for optimalization of driving force with continuous automatic shift of gear level in basic position with arms firmly or adjustably connected which are as a whole rotating around the pivot point. Fig. 2a, 2b and 3 indicate an example when the described mechanism is used as controlling mechanism to operate the opening and closing mechanism of the door wing, whereas fig. 3 indicates driving mechanism at maximal tilt with maximal gear ratio. Fig. 4a, 4b, 4c, 4d and 4e indicate schematically the possibilities of various arrangements of individual elements of the mechanism for optimalization of driving force with continuous automatic shift of gear ratio. Fig. 5 indicates an example of using the mechanism for optimalization of driving force with continuous automatic shift of gear ratio for balancing the constant weight, e.g. mass, when using the accumulator with linear force increase. Fig. 6a, 6b and 6c indicate examples of movable part mounting possibilities.

### Detailed description of the invention

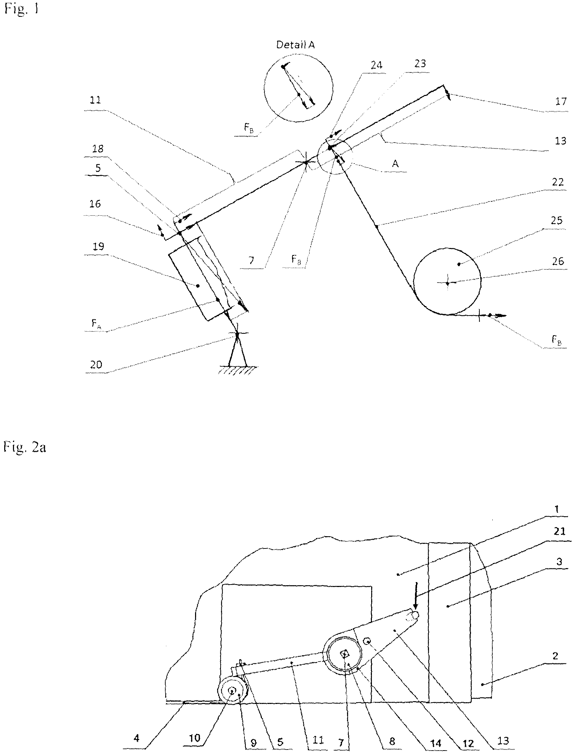

Fig. 1 schematically indicates an example of realization when around the pivot point 7 rotates the first arm 11 firmly or adjustably connected with the second arm 13. Depending on the angle of rotation, on the first arm 11 automatically moves the first freely movable mounting 5 of the energy accumulator 19 in the direction of the movement 18. The energy accumulator 19 can be realized e.g. by draught spring pivoted in rotary mounting 20. The energy accumulator 19 can be pneumatic, pneumatic-hydraulic, or based on other physical principle. Simultaneously on the second arm 13, which is firmly or adjustably connected with the first arm 11, moves the second freely movable mounting 23 of the second connecting piece 22 in the direction of the movement 24. The second connecting piece 22 is further led through the second pulley 25 rotating on a bolt 26. Arrangement of the energy accumulator mounting 19 ensures that the part of the force F_{A} vertical to the first arm 11 is during the whole time of the movement in the direction of the movement 18 of the first freely movable mounting 5 of the energy accumulator 19 practically consistent with force vector acting in the first movable mounting 5. Likewise the arrangement of the second freely movable mounting 23 of the second connecting piece 22 through the second pulley 25 ensures that the part of the force F_{B} vertical to the second arm 13 is during the whole time of the movement in the direction of the movement 24 of the second freely movable mounting 23 practically consistent with force vector acting in the second movable mounting 23.

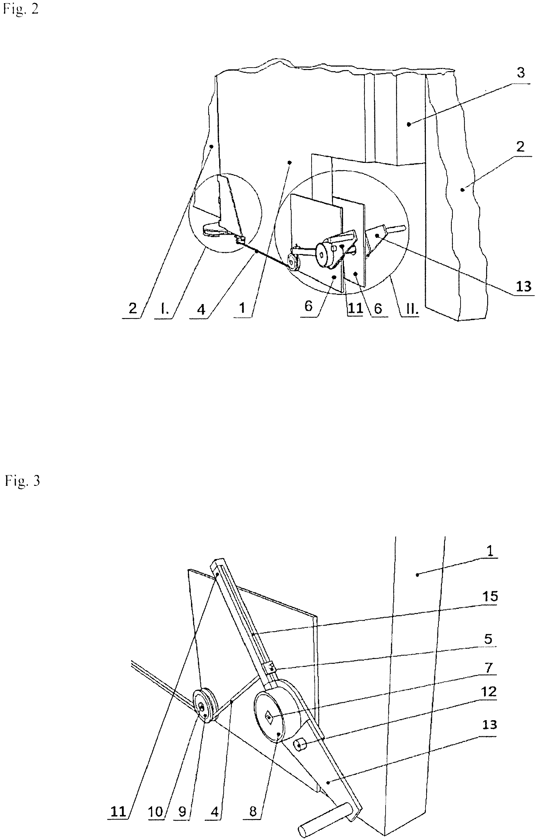

Fig. 2a and 2b indicate an example of implementation when the described mechanism is used as a mechanism for optimalization of driving force with continuous automatic shift of gear ratio II to operate the opening and closing mechanism I of the door wing 1. Rotary mounting 8 rotating around the pivot point 7 fixed on the supporting part 6 is connected with help of rotary bolt 12 of the second arm 13 with the first arm 11. The second arm 13 on which acts the driving force 21 leans against the thrust face 14 against the rotary mounting 8. This construction allows to lift off the second arm 13 in case that the mechanism for optimalization of driving force with continuous automatic shift of gear ratio II is installed on both sides of the door wing 1 and prevents possible injury of the person located on the opposite side than is the servicing person. On the rotary mounting 8 is further firmly connected the first arm 11 in whose groove 15 automatically, depending on the angle of rotation, moves the first connecting piece 4 with the first freely movable mounting 5. The first connecting piece 4 is led through the first pulley 9 mounted on the bolt 10. E.g. during operating the machinery part with linear force increase depending on travel, then the force on the second arm 13 can remain practically constant and its maximal size shall not exceed half of maximal force which would be otherwise needed. Arrangement of the first pulley 9 and the first freely movable mounting 5 of the first connecting piece 4 ensures that the geared force acts always vertically on the first arm 11 and there occurs almost no unwanted resolution of forces.
Fig. 3 indicates the mechanism for optimalization of driving force with continuous automatic shift of gear ratio at maximal tilt. The size of the second arm 13 is the same as before the tilt while working part of the first arm 11 diminished to minimum whereby there occurred the continuous automatic shift of gear ratio.

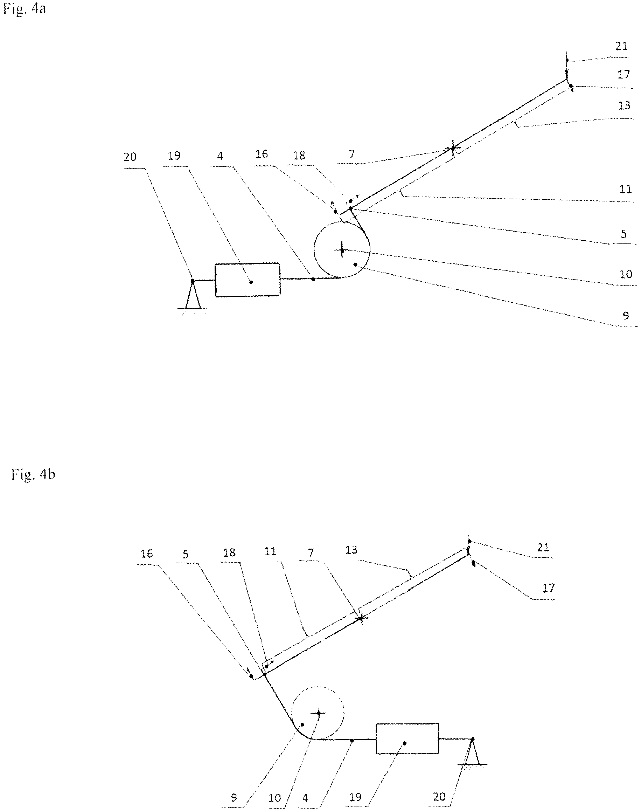

Fig. 4a indicates schematically one of the possibilities of arrangements of individual elements. During acting of driving force 21 in the direction of the movement 17 there occurs movement of the first arm 11 in the direction of the movement 16 and this starts the movement of the first freely movable mounting 5 in the direction of the movement 18. The first connecting piece 4 is led through the first pulley 9 rotating on rotary mounting 8 and then it is mounted on the energy accumulator 19 which can be e.g. draught spring which is attached to rotary mounting 20 by its second end.
Fig. 4b indicates other location of the energy accumulator 19 and the first pulley 9.

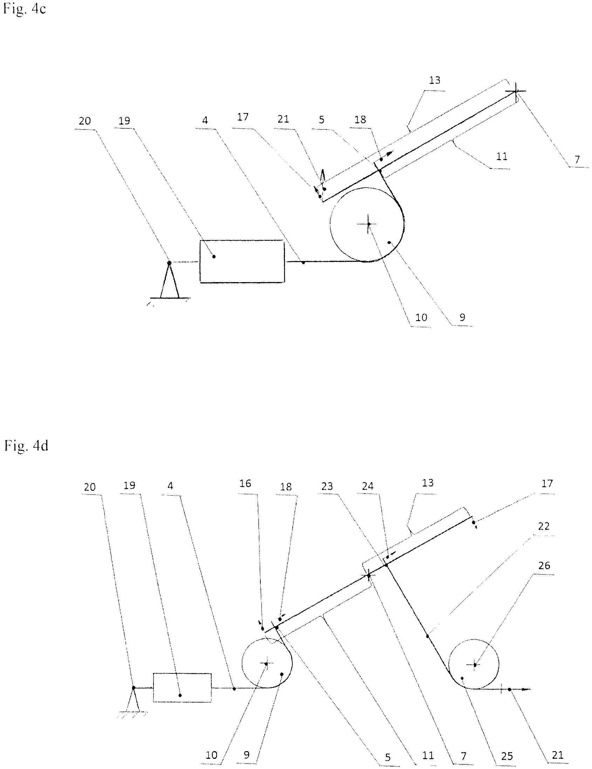

Fig. 4c indicates an example when the first arm 11 and the second arm 13 are united into single-arm lever rotating around the pivot point 7.
Fig. 4d indicates an example when also the second arm 13 is equipped with the second freely movable mounting 23 on which is mounted the second connecting piece 22 which moves in the direction of the movement 24. For the function is used the second connecting piece 22 which is led through the second pulley 25 rotating on the bolt 26.

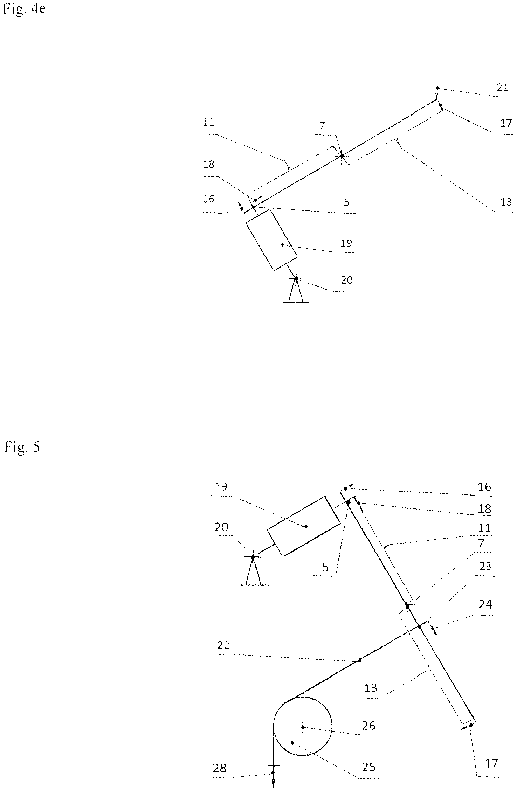

Fig. 4e indicates an example when instead of the first pulley 9 is on the rotary mounting 20 fixed the energy accumulator 19, by the second end the energy accumulator 19 is fixed to the first freely movable mounting 5 moving in the direction of the movement 18.
Fig. 5 indicates acting of the energy accumulator 19 for balancing the constant weight 28.

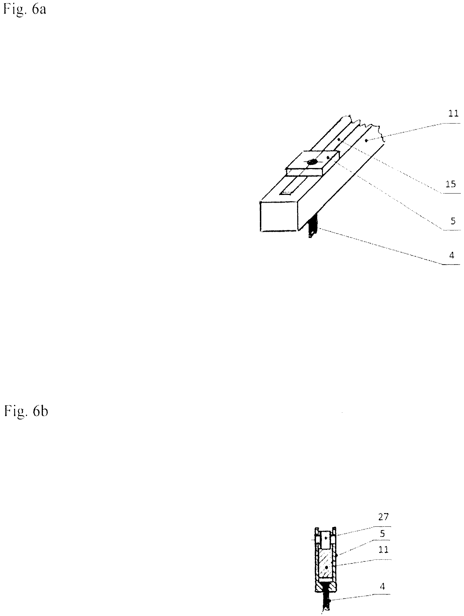

Fig. 6a indicates movable mounting 5 of the first connecting piece 4 in the groove 15 in the first arm 11. The same method of mounting can be applied in case of the second arm 13.
Fig. 6b indicates the first connecting piece 4 and its movable mounting 5 on the first arm 11 by help of the third pulley 27. The same method of mounting can be applied in case of the second arm 13.

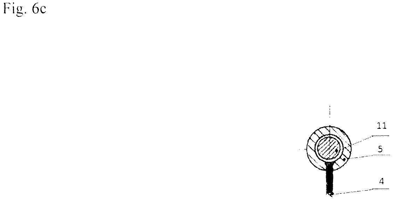

Fig.6c indicates circular sliding mounting.

It is possible to use this mechanism for optimalization of driving force with continuous automatic shift of gear ratio in two ways:
1) The same as it is mentioned in example of realization for opening and closing door mechanism, fig. 2a, 2b and 3, i.e. that the force acts on the second arm 13 and geared force is transferred by help of connecting piece 4 on the opening and closing door mechanism, or other mechanism.
2) During rotary mounting of the energy accumulator 19 while the second arm 13, alternatively the first arm 11 (fig. 1), gets into the lower position, it is possible to use the force on the second arm 13, alternatively on the first arm 11, fig. 4a, 4b, 4c, 4d, 4e, 5.

### Industrial applicability

It is possible to use this mechanism for optimalization of driving force with continuous automatic shift of gear ratio in all fields where it is desirable to eliminate linear increase of force e.g. of a spring or other force accumulator depending on travel and to substitute it with constant size of force. An example of use can be substitution of currently used counterweights or significant decrease in minimal needed driving force when operating mechanisms with a spring or other energy accumulator and maintaining the original function.

### Reference

- I.: Opening and closing mechanism
- II.: Mechanism for optimalization of driving force with continuous automatic shift of gear ratio

- 1.: Door wing
- 2.: Wall
- 3.: Door frame
- 4.: First connecting piece
- 5.: First freely movable mounting
- 6.: Supporting part
- 7.: Pivot point
- 8.: Rotary mounting
- 9.: First pulley
- 10.: Bolt of the first pulley
- 11.: First arm
- 12.: Rotary bolt
- 13.: Second arm
- 14.: Thrust face
- 15.: Groove
- 16.: Direction of the first arm motion
- 17.: Direction of the second arm motion
- 18.: Direction of the first movable mounting motion
- 19.: Energy accumulator
- 20.: Rotary mounting
- 21.: Driving force
- 22.: Second connecting piece
- 23.: Second freely movable mounting
- 24.: Direction of the second movable mounting motion
- 25.: Second pulley
- 26.: Bolt of the second pulley
- 27.: Third pulley
- 28.: Constant weight
- F_{A} -: vertical part of force acting in the first movable mounting
- F_{B} -: vertical part of force acting in the second movable mounting

## Claims

1. Mechanism for optimalization of driving force with continuous automatic shift of gear ratio **characterized by** consisting of two firmly or mutually adjustably connected arms forming a unit rotating around a pivot point (7), whereas the first arm (11) is equipped with the first freely movable mounting (5) of the first connecting piece (4), for continuous shift of gear ratio.

2. Mechanism of claim 1 **characterized by the fact, that** the first connecting piece (4) is connected to energy accumulator (19).

3. Mechanism of claim 2 **characterized by the fact, that** the energy accumulator (19) is the spring with linear features.

4. Mechanism of any of previous claims **characterized by the fact, that** the first connecting piece (4) is led through the first pulley (9).

5. Mechanism of any of previous claims **characterized by the fact, that** the second arm (13) is equipped with the second freely movable mounting (23) of the second connecting piece (22), for continuous shift of gear ratio, whereas the second connecting piece (22) is connected to the source of driving force.

6. Mechanism of claim 5 **characterized by the fact, that** the second connecting piece (22) is led through the second pulley (25).

7. Mechanism of any of previous claims **characterized by the fact, that** the first arm (11) and the second arm (13) are united into single-arm lever.
